# EUROPEAN PATENT APPLICATION

(11) **EP 4 556 581 A1**
(43) Date of publication of application: **21.05.2025**
(21) Application number: 24211550.9
(22) Date of filing: 07.11.2024
(51) Int. Cl.: C22B 1/00, B01D 61/42, C22B 3/06, C22B 3/08, C22B 3/24, C22B 3/32, C22B 3/38, C22B 3/42, C22B 3/44, C22B 7/00, C22B 3/00, C22B 26/12

(54) **METHOD OF EXTRACTING METAL FROM SALT SOLUTION DERIVED FROM SPENT BATTERY**

(30) Priority: 07.11.2023 KR 20230153018
(71) Applicant: SK Innovation Co., Ltd., Seoul 03188 (KR)
(72) Inventor: LA, Yeon Hwa, Daejeon 34124 (KR); MOON, Yong Geal, Daejeon 34124 (KR); LEE, Tea Young, Daejeon 34124 (KR)
(74) Representative: Prüfer & Partner mbB Patentanwälte · Rechtsanwälte

(57) **Abstract**

Proposed is a method of extracting a metal from a salt solution derived from a spent battery, the method including: 1) preparing a salt solution derived from a spent battery containing metal ions, the metal including any one of Mn, Co, Ni, and Li, or a combination thereof; 2) preparing a metal extractant mixture including a metal extractant and a LiOH-containing metal extractant activator; 3) bringing the metal extractant mixture into contact with the salt solution to produce a complex compound of the metal extractant mixture and the metal, and a first filiate; 4) recovering each of the complex compound and the first supernatant; 5) bringing an acid into contact with the complex compound to produce a metal salt, and a second supernatant; 6) recovering each of the metal salt and the second supernatant; and 7) recovering each of the activator and acid from the first supernatant through electrodialysis.

## Description

### BACKGROUND OF THE DISCLOSURE

### 1. Field of the Disclosure

The present disclosure relates to a method of extracting a metal from a salt solution derived from a spent battery.

### 2. Description of the Related Art

Recently, as environmental problems have emerged as a global issue due to an excessive use of fossil fuels, there is an increasing need for transportation running on eco-friendly alternative fuels rather than fossil fuels. These days, among the transportation running on these alternative fuels, the most rapidly distributed one is an electric vehicle that uses electrical energy.

An electric vehicle contains a battery, which is a device for powering the vehicle. Since the maximum capacity of the battery decreases as the battery is used, the lifespan of the battery has been shortened to the extent of from several years to a maximum of about 10 years.

With the rapid distribution of an electric vehicle as described above, the amount of salt waste generated in the battery manufacturing process is accordingly increasing worldwide. The amount of salt waste generated from spent batteries of electric vehicles is also increasing with increase of the electric vehicles reaching the end of their lifespan.

It is thus an object of the present invention to provide a method that allows for extracting valuable components such as a metal from a spent battery, particularly from a salt solution derived from a spent battery.

### [Related Art Document]

### [Patent Document]

(Patent document 1) KR 10-2361906 B1

### SUMMARY OF THE DISCLOSURE

According to one aspect of the present disclosure, a purpose is to provide a method of extracting a metal from a salt solution derived from a spent battery.

The method includes: 1) preparing a salt solution derived from a spent battery containing a metal ion, the metal including any one of Mn, Co, Ni, and Li, or a combination thereof; 2) preparing a metal extractant mixture including a metal extractant and a metal extractant activator, the metal extractant activator containing LiOH; 3) bringing the metal extractant mixture into contact with the salt solution to produce a complex compound of the metal extractant mixture and the metal, and a first supernatant; 4) recovering each of the complex compound and the first supernatant; 5) bringing an acid into contact with the complex compound to produce a metal salt and a second supernatant; 6) recovering each of the metal salt and the second supernatant; and 7) recovering each of the metal extractant activator and acid from the first supernatant through electrodialysis.

According to one embodiment, the metal extractant may be an acidic metal extractant containing any one of a -POOH functional group, such as D2HEPA (Di-2-ethylhexyl phosphoric acid), Cyanex 272 (Bis(2,4,4-trimethylpentyl) phosphinic acid), PC88A (2-Ethylhexyl phosphonic acid mono-2-ethylhexyl ester), Ionquest 801, and DEHPA (Diethylhexyl phosphoric acid), and a - COOH functional group, such as Versatic^{®} 10 (Neodecanoic Acid), Naphthenic Acid, and LIX 860, or a combination thereof.

According to a further embodiment, in the step 2), the metal extractant activator may be mixed in an amount of 0.2 to 1.0 mol per 1 mol of the metal extractant.

According to a further embodiment, in the step 3), the metal extractant mixture may be added in an amount of 2.0 to 4.0 mol per 1 mol of the ion of the metal in the salt solution.

According to a yet further embodiment, in the step 5), the acid may be sulfuric acid.

According to a yet further embodiment, in the step 5), the acid may be added in an amount of 1.0 to 2.0 mol per 1 mol of the complex compound.

According to a yet further embodiment, in the step 7), the electrodialysis may be performed using any one of a bipolar membrane, a cation exchange membrane, and an anion exchange membrane, or a combination thereof.

According to a yet further embodiment, the method may further include returning the recovered metal extractant activator to the step 2).

According to a yet further embodiment, the acid recovered in the step 7) may be returned to the step 1).

According to a yet further embodiment, the method may further include removing impurities contained in the first supernatant and then recovering each of the metal extractant activator and acid through electrodialysis.

According to a yet further embodiment, the impurity removal may be performed by any one of precipitation, adsorption, oxidation, and ion exchange, or a combination thereof.

According to the embodiments of the present disclosure, a valuable metal can be recovered from a salt solution derived from a spent battery while minimizing the occurrence of salt waste, thereby suppressing environmental pollution.

According to a further aspect of the present disclosure, a method of preparing or recycling a metal from a spent battery, wherein the battery comprises one or more metals selected from the group consisting of Mn, Co, Ni, and Li, or a combination thereof, comprises a step (a) of performing a pretreatment process for recovering reusable metal from the spent battery, thereby obtaining a salt solution derived from the spent battery; and a step (b) of conducting the above described method of extracting the metal from the salt solution obtained in step (a).

According to an embodiment, in the method of preparing or recycling a metal from a spent battery, the pretreatment process of step (a) is a process of recovering black powder containing a positive electrode active material from scrap of a spent battery and then treating the black powder with an acid to generate the salt solution derived from the spent battery and containing the metal in ion form.

According to an embodiment, the acid to generate the salt solution is sulfuric acid.

### BRIEF DESCRIPTION OF THE DRAWINGS

FIG. 1 shows a process flow diagram of a method of extracting a metal from a salt solution derived from a spent battery according to one embodiment;
FIG. 2 shows adding a metal extractant mixture to a salt solution according to a further embodiment; and a chemical reaction equation by which a reaction occurs in the adding of an acid to the complex compound; and
FIG. 3 shows a schematic diagram of performing electrodialysis according to a yet further embodiment.

### DESCRIPTION OF THE PREFERRED EMBODIMENTS

Hereinafter, the present disclosure will be described in detail with reference to the attached drawings. However, this is merely illustrative, and the present disclosure is not limited to the specific embodiments explained illustratively.

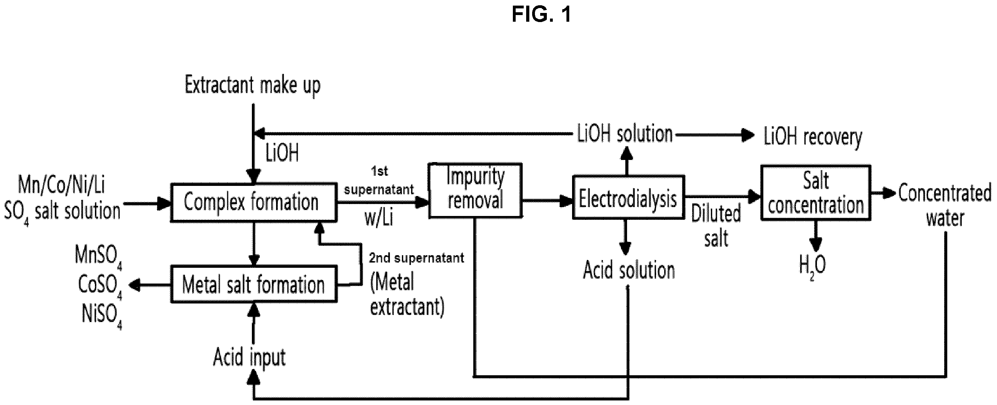

Referring to FIG. 1, a method of extracting a metal from a salt solution derived from a spent battery according to one embodiment is described.

The method includes 1) preparing a salt solution derived from a spent battery containing a metal ion, the metal including any one of Mn, Co, Ni, Li, or a combination thereof. The salt solution derived from a spent battery refers to the salt solution derived in the pretreatment process for recovering reusable metal parts from the spent battery after the battery have reached its end of the lifespan. In other words, the "derived" salt solution is a salt solution that is obtained when a battery that has reached the end of its lifespan, such as a spent lithium battery, is subj ected to a pretreatment process for recovering reusable metal parts from the spent battery. The salt solution may be derived from a spent battery, such as a lithium battery, in a valuable metal recovery process, the spent battery, such as a spent lithium battery, containing for example, any one of Ni, Co, Mn, Li, or a combination thereof (in the form of corresponding metal ions). Preferably, the spent lithium battery may comprise LiCoO₂ (LCO), LiFePO₄ (LFP), LiMn₂O₄ (LMO), LiNiMnCoO₂ (NMC), LiNiCoAlO₂ (NCA), LiMnO₂, LiSOCl₂, LiFeS₂, or combinations thereof. Specifically, the pretreatment process may be a process of recovering black powder containing a positive electrode active material from scrap of a spent battery and then treating the black powder with an acid to generate a salt solution containing a metal ion. While Fig. 1 indicates a SO₄ salt solution when sulfuric acid was used as the acid on the pretreatment process, suitable further acids that can be used in the pretreatment process are known to a skilled person, and include, for example,nitric acid, hydrochloric acid. Preferably, sulfuric acid may be used as the acid on the pretreatment process. The salt solution prepared in this way is the salt solution derived (or obtained) from the spent battery, after having carried out the pretreatment process. The salt solution contains the metal ion(s) derived from the metal in the positive electrode active material of the spent battery. As described above, when the positive electrode active material contains any one of Ni, Co, Mn, and Li, or a combination thereof, the metal may include any one of Mn, Co, Ni, and Li, or a combination thereof. Additionally, the salt solution derived from the spent battery may also include an ion derived from the acid used in the pretreatment process. For example, SO₄²⁻ ion derived from the acid may be included when sulfuric acid is used in the pretreatment process. Referring to FIG. 1, the salt solution from a spent battery is represented as a Mn/Co/Ni/Li and SO₄ salt solution.

The method includes 2) preparing a metal extractant mixture including a metal extractant and a metal extractant activator, the metal extractant activator containing LiOH. The metal extractant is a compound activated through a reaction with the metal extractant activator. A reaction of the activated metal extractant with the metal ion in the salt solution derived from the spent battery forms a complex compound. The metal extractant activator is a compound that activates a functional group of the metal extractant. In the present disclosure, the metal extractant activator includes LiOH, and specifically, the metal extractant activator may be LiOH. The metal extractant activator is mixed with the metal extractant to form a metal extractant mixture. In a metal extractant mixture, the metal extractant has its functional group activated through a reaction with the metal extractant activator. The method preferably does not use a compound containing a Na⁺ ion, such as NaOH, as a component of the metal extractant and/or as a metal extractant activator, so the first supernatant thereafter does not contain Na. Accordingly, the method does not require processes such as evaporation, crystallization, washing, and/or recrystallization to recover and purify a Li salt from a Na₂SO₄-containing solution and does not produce a compound such as Na₂SO₄ as a by-product.

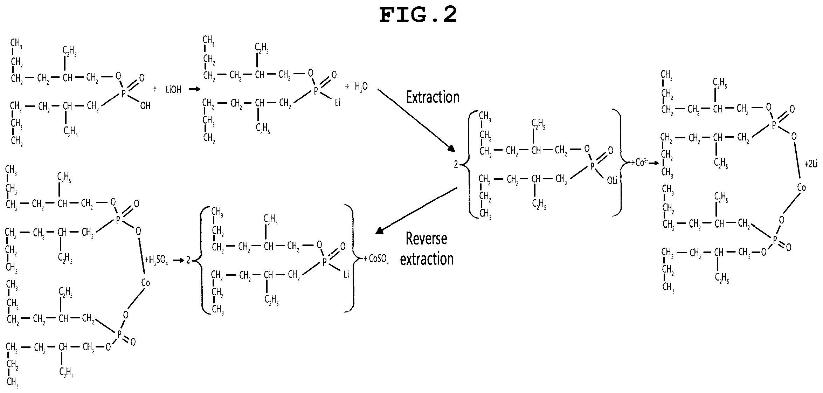

According to a further embodiment, the metal extractant may be an acidic metal extractant containing any one of a -POOH functional group, and -COOH functional group, or a combination thereof. The acidic metal extractant containing the -POOH functional group and/or -COOH functional group is used to extract a metal such as Mn, Co, or Ni from the salt solution. As shown in FIG. 2, the metal extractant containing the -POOH functional group is activated by replacing H at the end of the functional group with Li through an acid-base reaction with a metal extractant activator (LiOH), and then the activated metal extractant may be used to extract the metal contained in the salt solution by producing a complex compound with the metal ion (Co²⁺) in the salt solution.

According to a yet further embodiment, in the step 2), the metal extractant activator may be mixed in an amount of 0.2 to 1.0 mol per 1 mol of the metal extractant. As shown in FIG. 2, the metal extractant often contains one functional group per molecule, and thus one molecule of the metal extractant reacts with one molecule of the metal extractant activator for its activation. When the metal extractant activator is mixed in an amount of less than 0.2 mol per 1 mol of metal extractant in step 2), the metal extractant may not be activated smoothly. When the metal extractant activator is mixed in an amount exceeding 1.0 mol per 1 mol of metal extractant, it may adversely affect metal extraction efficiency by increasing the pH of the salt solution. According to a yet further embodiment, in the step 2), the metal extractant activator may be mixed in an amount of 0.4 to 0.8 mol or 0.5 to 0.6 mol per 1 mol of the metal extractant.

The method includes 3) bringing the metal extractant mixture into contact with the salt solution to produce a complex compound of the metal extractant mixture and the metal, and a first supernatant. This is indicated as a "complex compound formation" in FIG. 1. In step 3), two molecules of the activated metal extractant included in the metal extractant mixture come in contact with one divalent metal ion in the salt solution to produce a complex compound. The remaining components of the salt solution, that did not involve producing a complex compound, are included into the first supernatant. The complex compound is in an oil phase, and the first supernatant is in a water phase, and the complex compound and first supernatant are phase-separated by density difference.

According to a yet further embodiment, in the step 3), the metal extractant mixture may be added in an amount of 2.0 to 4.0 mol per 1 mol of the metal ion in the salt solution. As shown in FIG. 2, the metal ion in the salt solution mainly has an oxidation number of +2, and reacts with two molecules of the activated metal extractant to produce a complex compound. In the step 3), when the metal extractant mixture is added in an amount of less than 2.0 mol per 1 mol of metal ion in the salt solution, a large amount of the metal ion that do not participate in the reaction for the complex compound formation may remain in the salt solution, reducing the efficiency of metal extraction. In the step 3), when the metal extractant mixture is added in excess of 4.0 mol per 1 mol of the metal ion in the salt solution, the excess metal extractant mixture will not react with the metal ion and will remain, making it uneconomical. In a yet further embodiment, in the step 3), the metal extractant mixture may be added in an amount of preferably 2.0 to 3.0 mol, or 2.2 to 2.5 mol, per 1 mol of the metal ion in the salt solution. More preferably, the metal extractant mixture may be added on a molar basis according to a pH isotherm curve of a target metal to be extracted.

The method includes 4) recovering each of the complex compound and the first supernatant. The complex compound and first supernatant are recovered separately from each other, and each undergoes separate processing as described later.

The method includes 5) bringing an acid into contact with the complex compound to produce a metal salt, and a second supernatant. This is indicated as the "metal salt formation" in FIG. 1. When the complex compound and acid come into contact, as shown in FIG. 2, the bond between the functional group portions of the metal extractant in the complex compound and the metal ion is broken, and the metal extractant is regenerated. At the same time, the metal ion is converted to the form of a metal salt. The metal salt is dissolved in an aqueous solution (water phase) and is recovered by phase-separation from the second supernatant in an oil phase due to density difference. As shown in FIG. 2, the second supernatant contains a metal extractant regenerated by binding the functional group portions of the metal extractant in the complex compound with the H⁺ ion of the acid.

In a yet further embodiment, the acid in the step 5) may be any one of sulfuric acid, nitric acid, hydrochloric acid, or a combination thereof. The acid added to the complex compound is not limited as long as the acid helps to regenerate the metal extractant and allow the metal in the salt solution to be recovered in the form of a metal salt. From the viewpoint of allowing the metal in the salt solution to be recovered in the form of metal sulfate, which is a raw material for manufacturing a battery precursor, the acid is preferably sulfuric acid. In addition, the sulfuric acid may be cheaper than other strong acids in terms of cost.

According to a yet further embodiment, in the step 5), the acid may be added in an amount of 1.0 to 2.0 mol per 1 mol of the complex compound. As shown in Figure 2, when the acid in contact with the complex compound in the step 5) is the sulfuric acid, one molecule of the sulfuric acid destroys the bonds between two metal extractant functional groups and one metal ion present in the complex compound, forming two molecules of metal extractant and one molecule of metal salt. In the step 5), when the acid is added in an amount of less than 1.0 mol per mol of the complex compound in the complex compound, only a portion of the bonds between the metal extractant functional groups and metal ion in the complex compound may be destroyed, only a smaller amount of molecules than the desired amount remain. This may result in a reduction in a recovered metal salt amount. In the step 5), when the acid is added in an amount exceeding 2.0 mol per 1 mol of the complex compound in the complex compound, the pH of the aqueous solution containing the metal salt is lowered due to the excess acid, leading to equipment constraints in the subsequent metal salt concentration and crystallization. According to a yet further embodiment, in the step 5), the acid may be added in an amount of preferably 1.0 to 1.5 mol, more preferably 1.0 to 1.2 mol, per 1 mol of the complex compound to the complex compound.

The method includes 6) recovering each of the metal salt and the second supernatant. The metal salt recovered here may be reused as a raw material for manufacturing a battery precursor through separate concentration/crystallization and purification processes. The recovered second supernatant may be returned to the step 3). In the step 3), the metal extractant that is present in the recovered second supernatant may be activated through a reaction with the metal extractant activator in the metal extractant mixture, and then participate in the reaction of the complex compound formation.

The method includes 7) recovering each of the metal extractant activator and acid from the first supernatant using electrodialysis. This is indicated as the "electrodialysis" in FIG. 1. The step 7) of recovering each of the metal extractor activator and acid using electrodialysis involves decomposing the water component of the first supernatant into H⁺ and OH⁻ by applying power between two electrodes and then binding these ions with ionic components or salts present in the first supernatant, for example, Li₂SO₄ to recover a binding product in acid and base form. The base recovered in the electrodialysis means the metal extractant activator. As described above, the metal extractant activator may contain LiOH, specifically can be LiOH. A device used in the electrodialysis may be used without limitation as long as the device may recover an acid and base from the first supernatant. The salt at a high concentration in the salt solution derived from the spent battery is separated in the electrodialysis and recycled as an acid and base, and thus the salt solution is partially desalted. Some desalted salt solution (demineralized water) is referred to as "diluted salt" in FIG. 1. The diluted salt is concentrated ("salt concentration" in FIG. 1) to the salt concentration level before executing the electrodialysis ("concentrated water" shown in FIG. 1), and the concentrated water may be returned to the electrodialysis.

In a yet further embodiment, the recovering of each of the metal extractant activator and acid using electrodialysis may be performed by any one of a bipolar membrane (BPM), a cation exchange membrane (CEM), and an anion exchange membrane (AEM), or a combination thereof. The cation exchange membrane is a membrane made of a polymer layer that allows only a positive ion to pass through. The anion exchange membrane is a membrane made of a polymer layer that allows only an anion to pass through. The bipolar membrane is a membrane of two polymer layers overlapped, each of which allows corresponding positive ion and anion to pass through. In a yet further embodiment, the electrodialysis may be performed using a bipolar membrane.

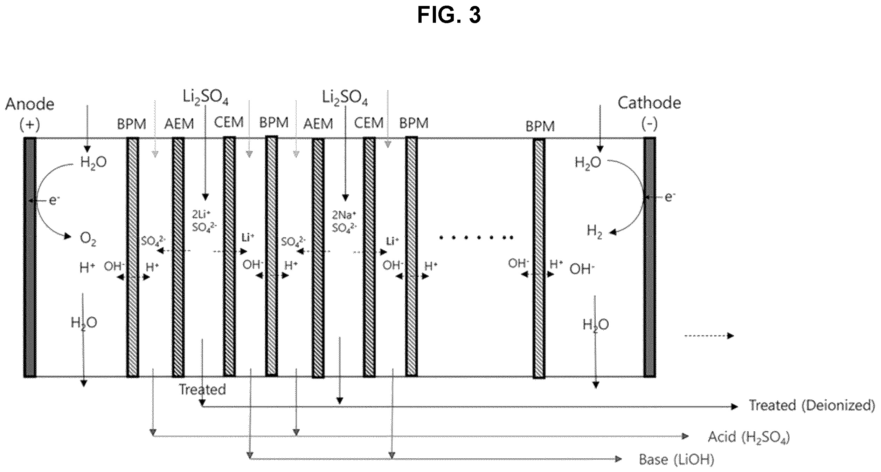

Referring to FIG. 3, the recovering of each of the metal extractant activator and acid using the electrodialysis is schematically depicted. After water is decomposed into H⁺ and OH⁻ at the interface between the cation-permeable polymer layer and anion-permeable polymer layer of the bipolar membrane, OH⁻ binds with a Li⁺ ion generated by decomposition of Li₂SO₄ salt to produce a base (LiOH), and to produce an acid (H₂SO₄), H⁺ binds with SO₄²⁻ ion generated by decomposition of Li₂SO₄ salt. In the existing membrane process, membrane-permeable substances are selective. Meanwhile, in a process using a bipolar membrane, the electrolysis reaction of water occurs at the interface between the cation-permeable polymer layer and anion-permeable polymer layer, rather than on the electrode surface. For this reason, in the bipolar membrane, electrodialysis is performed by installing electrodes only at both ends of the membrane stack without the need to install electrodes between each membrane. Since electrodialysis is performed even at a lower voltage, the bipolar membrane is advantageous in reducing device design and device operation costs.

According to a yet further embodiment, the method may further include 8) returning the recovered metal extractant activator to the step 2). As described above, the first supernatant introduced into electrodialysis contains Li⁺, which is an ion remaining after the activation reaction of the metal extractant. To be converted into a metal extractant activator (LiOH), the Li⁺ reacts with OH⁻ generated by electrolysis of water. The metal extractant activator thus produced is the same as the metal extractant activator used in the step 2) of preparing a metal extractant mixture, and the metal extractant activator may be recovered and returned to the step 2). The returned metal extractant activator may activate the functional group of the metal extractant in the same way as the existing metal extractant activator. Meanwhile, the returned metal extractant activator may be used to activate the metal extractant after undergoing concentration, if necessary.

In a yet further embodiment, the recovered acid may be returned to the step 1) of preparing a salt solution derived from a spent battery containing a metal ion. The anion is one which constitutes the acid recovered in the electrodialysis, and the anion is derived from the acid added in the pretreatment process to prepare a salt solution by leaching the metal in the step 1). For example, when an acid added in the pretreatment process of the step 1) is H₂SO₄, SO₄²⁻ ion is included in the first supernatant and are introduced into the recovering of each of the metal extractant activator and acid using electrodialysis in the step 7). In the recovering of each of the metal extractant activator and acid using electrodialysis, SO4²⁻ ion binds with H⁺ generated by electrolysis of water and are recovered as H₂SO₄, which is the same as the acid added in the step 1). Therefore, the acid recovered using electrodialysis may be returned to the step 1) and used for pretreatment to prepare a salt solution by leaching the metal.

According to a yet further embodiment, the method may further include removing an impurity contained in the first supernatant, and then recovering each of the metal extractant activator and acid using electrodialysis. This is indicated as the "impurity removal" in FIG. 1. The first supernatant may contain an impurity from the steps 1 to 5 in addition to the Li⁺ ion from the metal extractant activator and anion from the acid (for example, SO₄²⁻) from the step 5). Herein, "impurity" refers to a substance in the aqueous phase other than the components constituting the acids and bases recovered by electrodialysis in the step 7). The impurity includes, for example, a metal extractant dissolved in small amounts in the first supernatant in the step 3), the complex compound, and a Li⁺-excluded metal ion that remains and may not be recovered in the form of a metal salt. There is no limit to the impurity removal method as long as the impurity may be removed.

According to a yet further embodiment, the impurity removal may be performed by any one of precipitation, adsorption, oxidation, and ion exchange, or a combination thereof. The precipitation may include coagulation precipitation. The coagulation precipitation is a process of separating an impurity in the first supernatant from the treatment liquid through impurity precipitation by adding a chemical coagulant or coarsening the impurity in electrocoagulation. More specifically, the coagulation precipitation involves adding a chemical coagulant or eluting metal ion from the electrode to form a hydroxide of the metal ion and involves forming an aggregate through a coagulation reaction between the hydroxide and impurity in the first supernatant. Herein, the aggregate refers to a substance of the impurity in the first supernatant aggregated by electric coagulation. The treatment liquid refers to a liquid component after the aggregate is separated from the first supernatant.

The precipitation process after coagulation is a process of separating and removing the aggregate from the treatment liquid by density difference between the treatment liquid and the aggregate in the first supernatant. In a yet further embodiment, the precipitation may be performed by known means for separating the aggregate from the treatment liquid. For example, the precipitation may be performed by known means such as a sedimentation tank and a skimmer. After the precipitation process, the aggregate separated from the treatment liquid may be discarded or introduced into further treatments, and the treatment liquid may be subj ected to electrodialysis.

The adsorption is a process of removing the impurity in the first supernatant by adsorbing the impurity with an adsorbent. There is no limit to the method of adsorption as long as the method may separate the treatment liquid from the impurity, and as an example, the method may be performed through filtration using a filter containing an adsorbent. The adsorbent type is also not limited as long as the adsorbent may adsorb the impurity, and activated carbon may be used as an example.

The oxidation process may be performed using chemicals. For example, the oxidation may include a process using Fenton oxidation, which generates hydroxyl radicals (OH radicals) through a catalytic reaction between the impurity and hydrogen peroxide or using ozone oxidation, which injects ozone. In addition, any process that oxidizes and removes harmful substances through an oxidation reaction may be used without limitation.

The ion exchange process is a process for separating a remaining polyvalent metal ion from the treatment liquid. In the ion exchange process, the polyvalent metal ion are precipitated in a salt form and separated from the treatment liquid by adding an ion exchange washing solution.

The present disclosure has been described in detail above through specific embodiments. The embodiments are for specifically explaining the present disclosure, and the present disclosure is not limited thereto.

All simple modifications or changes to the present disclosure fall within the scope of the present disclosure, and the specific scope of protection of the present disclosure will be made clear by the appended claims.

## Claims

1. A method of extracting a metal from a salt solution derived from a spent battery, the method comprising:
1) preparing a salt solution derived from a spent battery containing a metal ion, the metal including any one of Mn, Co, Ni, and Li, or a combination thereof;
2) preparing a metal extractant mixture including a metal extractant and a metal extractant activator, the metal extractant activator containing LiOH;
3) bringing the metal extractant mixture into contact with the salt solution to produce a complex compound of the metal extractant mixture and the metal, and a first supernatant;
4) recovering each of the complex compound and the first supernatant;
5) bringing an acid into contact with the complex compound to produce a metal salt, and a second supernatant;
6) recovering each of the metal salt and the second supernatant; and
7) recovering each of the metal extractant activator and acid from the first supernatant through electrodialysis.

2. The method of claim 1, wherein the metal extractant is an acidic metal extractant comprising any one of a -POOH functional group, and a -COOH functional group, or a combination thereof.

3. The method of claim 1 or 2, wherein, in the step 2), the metal extractant activator is mixed in an amount of 0.2 to 1.0 mol per 1 mol of the metal extractant.

4. The method of anyone of claims 1 to 3, wherein, in the step 3), the metal extractant mixture is added in an amount of 2.0 to 4.0 mol per 1 mol of the metal ion in the salt solution.

5. The method of anyone of claims 1 to 4, wherein, the acid in the step 5) is sulfuric acid.

6. The method of any one of claims 1 to 5, wherein, in the step 5), the acid is added in an amount of 1.0 to 2.0 mol per 1 mol of the complex compound.

7. The method of anyone of claims 1 to 6, wherein, in the step 7), electrodialysis is performed using a bipolar membrane, a cation exchange membrane, and an anion exchange membrane, or a combination thereof.

8. The method of any one of claims 1 to 7, further comprising returning the recovered metal extractant activator to the step 2).

9. The method of claim any one of claims 1 to 7, wherein, in the step 7), the acid is returned to the step 1).

10. The method of any one of claims 1 to 9, further comprising removing an impurity in the first supernatant, and then recovering each of the metal extractant activator and the acid through electrodialysis.

11. The method of claim 10, wherein the impurity removal is performed by any one of precipitation, adsorption, oxidation, and ion exchange, or a combination thereof.

12. A method of preparing or recycling a metal from a spent battery, wherein the battery comprises one or more metals selected from the group consisting of Mn, Co, Ni, and Li, or a combination thereof, the method comprising:
(a) performing a pretreatment process for recovering reusable metal from the spent battery, thereby obtaining a salt solution derived from the spent battery; and
(b) conducting the method of extracting the metal from the salt solution obtained in step (a) according to any one of claims 1 to 11.

13. The method according to claim 12, wherein the pretreatment process of step (a) is a process of recovering black powder containing a positive electrode active material from scrap of a spent battery and then treating the black powder with an acid to generate the salt solution derived from the spent battery and containing the metal in ion form.

14. The method according to claim 13, wherein the acid to generate the salt solution is sulfuric acid.
